# EUROPÄISCHE PATENTSCHRIFT

(11) **EP 3 427 572 B1**
(45) Veröffentlichungstag und Bekanntmachung des Hinweises auf die Patenterteilung: **22.04.2020**
(21) Anmeldenummer: 18182573.8
(22) Anmeldetag: 10.07.2018
(51) Int. Cl.: A01G 9/28, A01G 9/02

(54) **EINFASSUNG ZUM AUFNEHMEN VON ERD- UND/ODER KOMPOSTMATERIAL**
ENCLOSURE FOR RECEIVING SOIL AND/OR COMPOST MATERIAL
CADRE DE RÉCEPTION DE TERRE ET / OU COMPOST

(30) Priorität: 11.07.2017 DE 202017104115 U
(43) Veröffentlichungstag der Anmeldung: 16.01.2019
(73) Patentinhaber: AGOR-AT Automotive Technologie GmbH, 99885 Ohrdruf (DE)
(72) Erfinder: Simon, Reinhard, 99885 Ohrdruf (DE)
(74) Vertreter: Kruspig, Volkmar

(56) Entgegenhaltungen:
- EP-A1- 2 348 920
- WO-A2-2009/137774
- DE-A1- 19 509 392
- DE-U1-202017 101 192
- JP-A- 2001 248 136
- US-A- 4 716 680
- US-A1- 2008 120 905

## Beschreibung

Die Erfindung betrifft eine Einfassung zum Aufnehmen von Erd- und/oder Kompostmaterial mit den Merkmalen des Anspruchs 1.

Derartige Einfassungen dienen insbesondere zum Aufbauen eines Hochbeetes oder eines Komposters. Die Einfassung besteht bei den bekannten Varianten aus einer Verschalung, die beispielsweise aus Holzbrettern oder Metallblechen aufgebaut ist. Diese bildet ein kistenartiges Gebilde. Das kistenartige Gebilde wird mit Erde und/oder dem zu kompostierenden Material befüllt. Es entsteht hierdurch das Hochbeet bzw. der Komposter.

Zum Realisieren derartiger Einfassungen sind auch Bausätze aus Fertigteilen erhältlich, die miteinander verfügt werden können und somit auch dem handwerklich unerfahrenen Laien einen schnellen und relativ umstandslosen Aufbau der Einfassung ermöglichen und somit das Anlegen eines Komposters bzw. eines Hochbeetes erleichtern soll. Dem Laien werden hierdurch zeit- und arbeitsintensive Konstruktions- und Handwerksarbeiten abgenommen.

So ist beispielsweise in der AU 2011/201550 A1 eine Anordnung offenbart, mit der ein Hochbeet gestaltet werden kann. Vorgesehen sind dort einzelne Elemente, die über ineinandergreifende Nuten und Nasen und durch ein zusätzliches Einhängen eines Stabes als ein hierfür vorgesehenes Verbindungselement verbunden werden können.

Die US 6 854 221 B1 offenbart Elemente für eine Einfassung, bei der mehrere Seitenteile übereinander angeordnet und durch ein Ineinandergreifen zueinander positioniert werden können. Die Fixierung der Seitenteile erfolgt durch das Einbringen eines Stabes als Verbindungselement in Längsrichtung durch alle Seitenteile.

Die US 5 168 678 offenbart einzelne Elemente, die mittels einer Schraube oder einem Stab miteinander so verbunden werden, dass die einzelnen Elemente gegeneinander geschwenkt werden können.

Es wird somit bei den aus dem Stand der Technik bekannten Fertigteilen davon ausgegangen, dass diese Teile mit zusätzlichen Verbindungselementen zusammengefügt werden müssen. Das bedeutet, dass bei dem Aufbau der Einfassung stets genügend viele Verbindungselemente vorhanden sein müssen. Bei einem Umbau oder einem zeitweisen Abbau der Einfassung muss entsprechend darauf geachtet werden, dass möglichst kein Verbindungselement verloren geht. Dies erzwingt einen gewissen Aufwand bei der Lagerung der Fertigteile, die sich unter den Bedingungen eines Kleingartens mit Lauben, Abstellkammern und Geräteschuppen nur sehr schlecht auf Dauer realisieren lässt. Unter solchen Bedingungen gehen erfahrungsgemäß immer Teile verloren oder werden aus anderen Gründen unbrauchbar.

Die JP 2001248136 A offenbart eine Verbindung der Einzelteile der Einfassung ohne zusätzliche Verbindungselemente. Gezeigt ist in der Druckschrift eine Einfassung zum Einfüllen von Erde und/oder Gestein, bei dem Einfassungsteile über eine Verbindung aus einem weiblichen Verbinder an einem Einfassungsteil mit einem männlichen Verbinder an einem weiteren Einfassungsteil schwenkbar miteinander verbindbar sind. Das weibliche Teil ist als eine Ausklinkung ausgebildet, in welchen der männliche Teil eingreift.

Bei der dort gezeigten Gestaltung der Einfassung besteht allerdings das Problem, dass die Winkelstellung der miteinander verbundenen Einzelteile variabel und nicht definiert ist. Das bringt erhebliche Justier- und Einstellarbeiten mit sich, die den Vorgang des Aufbauens der Einfassung unnötig umständlich gestalten.

Es besteht somit die Aufgabe, eine Einfassung zur Aufnahme von Erd- und/oder Kompostmaterial anzugeben, die auf eine besonders einfache Weise zusammenfügbar ist, ohne notwendige Kleinteile auskommt, sich umstandslos lagern lässt, eine stabile Einfassung bildet und beliebig auf-, ab- und umgebaut werden kann, ohne dass dabei vom Laien irgendein Hauptaugenmerk auf die Vollständigkeit von Kleinteilen oder Verbindungselementen gelegt zu werden braucht. Außerdem soll eine definierte Winkelstellung der Seitenteile der Einfassung realisierbar sein, die eine hinreichende Stabilität aufweist.

Die Aufgabe wird mit einer Vorrichtung zum Zusammenbau einer Einfassung zum Aufnehmen von Erd- und/oder Kompostmaterial, insbesondere für einen Komposter oder ein Hochbeet, mit den Merkmalen des Anspruchs 1 gelöst.

Die Einfassung zum Aufnehmen von Erd- und/oder Kompostmaterial, insbesondere für einen Komposter oder ein Hochbeet, besteht aus einer beliebigen Anzahl von einteiligen und miteinander zusammenfügbaren Plattenelementen. Jedes Plattenelement weist dabei an paarweise einander gegenüberliegenden Seiten eine Reihe von Ausformungen und dazu entsprechenden Ausnehmungen auf, wobei die Ausformungen eines ersten Plattenelementes mit den Ausnehmungen eines zweiten Plattenelementes ohne ein zusätzliches Verbindungselement zu der Einfassung verbindbar sind.

Die einzig notwendigen Bauelemente für die Einfassung sind somit die Plattenelemente selbst, die untereinander über die Ausformungen und Ausnehmungen verbunden werden können. Diese greifen ohne ein zusätzliches Befestigungselement ineinander. Die Ausformungen sind eine Reihe von Haken und die Ausnehmungen sind eine Reihe von Stegen zum Einhaken der Haken.

Erfindungsgemäß sind im Bereich der Haken mindestens ein in ein Hohlprofil eines über die Stege eingehakten weiteren Plattenelementes übergreifendes und die verbundenen Plattenelemente in einer festen Winkelstellung fixierendes Anschlagmittel vorgesehen.

Das Anschlagmittel besteht aus einer eine Seite des Hohlprofils übergreifenden Anschlagkralle und einem in einer Endstellung an einer Flanke des Hohlprofils anliegenden Anschlagflanke.

Hierdurch können die Plattenelemente einerseits in einer Winkelstellung miteinander verbunden werden, wobei die Winkelstellung einen definierten maximalen Öffnungswinkel aufweist. Dieser Öffnungswinkel kann beispielsweise 90° betragen. Das Anschlagmittel sichert dann ein rechtwinkliges Zusammenfügen der Plattenelemente in einer eindeutigen Winkelstellung.

Die Anschlagkralle bewirkt ein Einschnappen der Plattenelemente beim Erreichen der festen Winkelstellung, die Anschlagflanke verhindert ein Verschwenken der Stellung der Plattenelemente über diese Winkelstellung hinaus. Zusammen wird hierdurch ein Arretieren der beiden Plattenelemente in der hierdurch definierten Winkelstellung bewirkt.

Die Ausformungen sind in einer weiteren Art eine Reihe von Nasen und die Ausnehmungen eine Reihe von Nuten zum Einrasten der Nasen. Sowohl die Haken und die Stege als auch die Nasen und Nuten können beide an ein und demselben Plattenelement vorhanden sein und in verschiedenen Verbindungsrichtungen ein Zusammenfügen der Plattenelemente auf unterschiedliche Weise bewirken.

Zusätzlich kann das Plattenelement eine die Seitenfläche des Plattenelementes rückseitig gitterförmig bedeckende Anordnung aus Versteifungsstegen aufweisen. Die Versteifungsstege verhindern insbesondere ein Ausbeulen und Verziehen der Plattenelemente infolge der durch die eingefüllte Erde entstehenden Druckbelastung.

Bei einer weiteren Ausführungsform ein das Plattenelement am Rand umgebendes Seitenrandprofil und/oder die Versteifungsstege Öffnungen zum Hindurchführen mindestens eines Spannmittels, insbesondere eines Spannseiles, auf. Das Spannmittel ist kein Befestigungs- oder Verbindungselement, es dient lediglich einer zusätzlichen Versteifung des Plattenelementes gegenüber auftretenden Druckkräften.

Die erfindungsgemäße Vorrichtung soll anhand von Ausführungsbeispielen näher erläutert werden. Zur Verdeutlichung dienen die Figuren 1 bis 10. Es werden für gleiche bzw. gleichwirkende Teile dieselben Bezugszeichen verwendet.

Es zeigt:
- Fig. 1: eine Gesamtdarstellung einer Einfassung im Überblick,
- Fig. 2: ein beispielhaftes Plattenelement und dessen Außenseite,
- Fig. 3: eine weitere Ansicht des Plattenelementes und dessen Außenseite,
- Fig. 4: eine beispielhafte Innenseite des Plattenelementes,
- Fig. 5: eine weitere Ansicht der Innenseite des Plattenelementes,
- Fig. 6: das Plattenelement in einer Sicht auf die Außenseite und in einer Seitenansicht,
- Fig. 7: das Plattenelement in einer Sicht auf die Innenseite und in einer Seitenansicht,
- Fig. 8: eine Darstellung der Verbindungen zweier Plattenelemente über deren Stege und Haken,
- Fig. 9: zwei miteinander verbundene Plattenelemente,
- Fig. 10: eine Ansicht einer teilweise aufgebauten Einfassung.

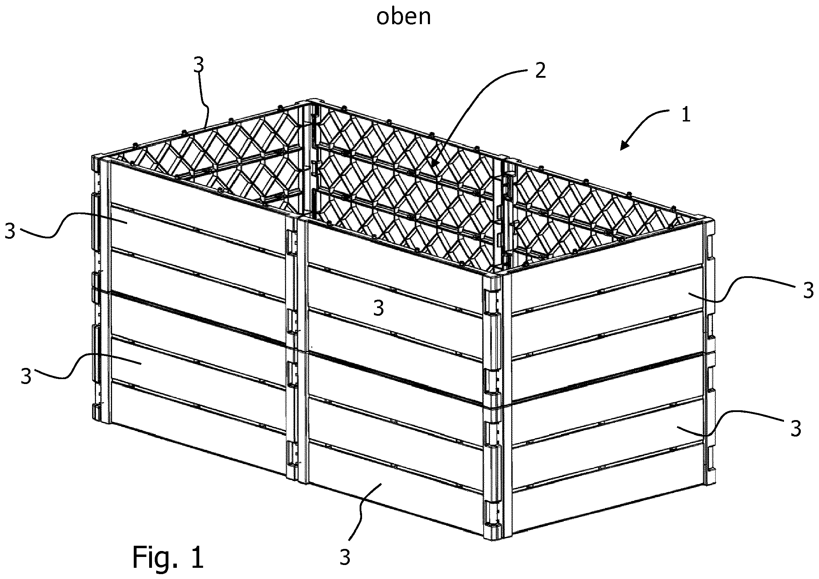

Fig. 1 zeigt eine Einfassung 1 in einer Gesamtdarstellung im Überblick. Die Einfassung weist eine im Wesentlichen rechteckige Grundfläche auf. Die Einfassung umschließt einen Hohlraum 2, in welchen Erdmaterial und/oder Kompostiermaterial eingefüllt werden kann. Hierdurch kann die Einfassung zum Fertigen eines Komposters oder für das Anlegen eines Hochbeetes verwendet werden.

Die Einfassung besteht aus einer Vielzahl von einzelnen Plattenelementen 3. Diese können in einer beliebigen Anzahl und in einer beliebigen Konfiguration zusammengefügt werden, wobei keine zusätzlichen Befestigungselemente notwendig sind, wie im Weiteren erläutert wird. Hierdurch lassen sich in einer sehr einfachen Weise Einfassungen in einer praktisch beliebigen Form und Größe, insbesondere mit einem beliebigen inneren Hohlraum und beliebig hohen Seitenwänden, zusammenfügen.

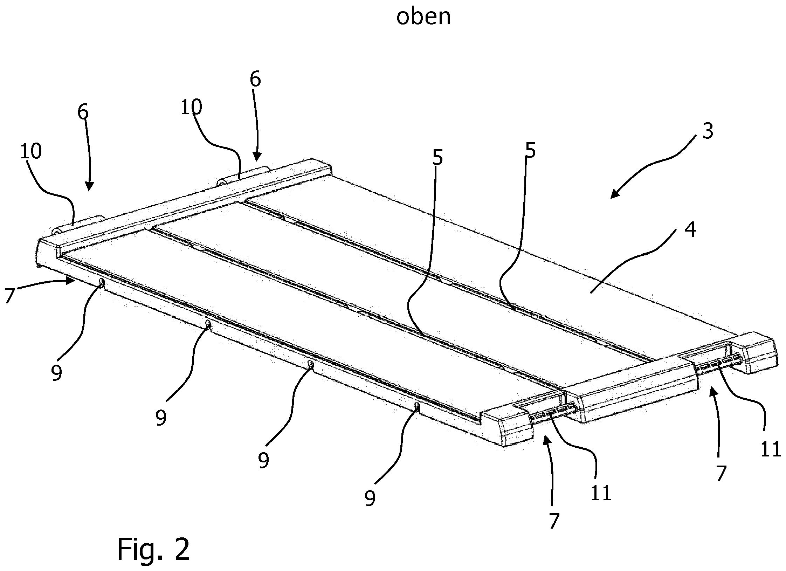

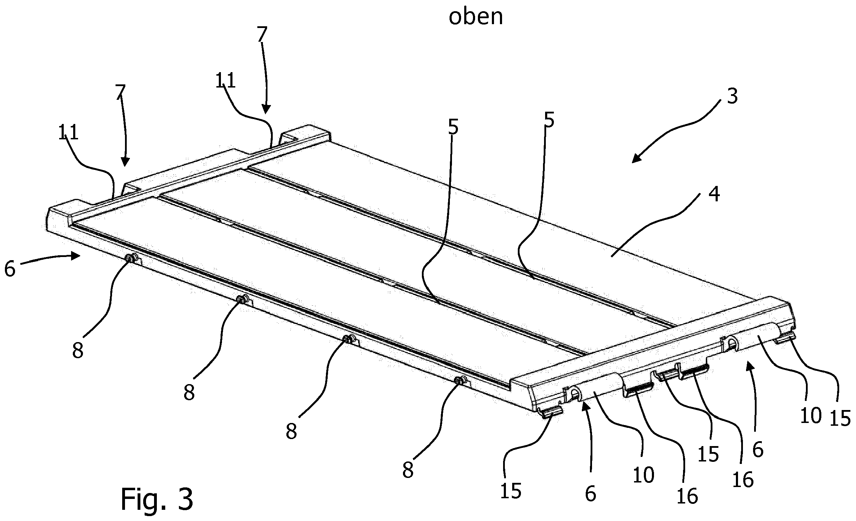

Fig. 2 zeigt eine erste Ansicht eines Plattenelementes 3 auf dessen Außenseite 4, Fig. 3 zeigt eine weitere Ansicht des Plattenelementes auf dessen Außenseite. Die Außenseite 4 ist im Wesentlichen glatt ausgebildet und weist hier zwei rillenförmige Profillinien 5 auf, die als Versteifungen der Fläche wirken. Das Plattenelement weist in seinem Randbereich Ausformungen 6 sowie dazu komplementäre Ausnehmungen 7 auf. Die Ausformungen und Ausnehmungen sind so ausgebildet, dass zwei Plattenelemente jeweils paarweise ohne Befestigungselemente zusammengefügt werden können.

Bei dem hier vorliegenden Beispiel sind jeweils zwei verschiedene Arten von Ausformungen und Ausnehmungen am Plattenelement vorgesehen. Bei einem ersten Paar sind die Ausformungen als eine Reihe von Nasen 8 und die Ausnehmungen als eine Reihe von Nuten 9 ausgebildet. Wie aus dem Vergleich von Fig. 2 und Fig. 3 zu entnehmen ist, können die Nasen 8 in die Nuten 9 eingesteckt werden. Zwei Plattenelemente können somit an den entsprechenden Seitenkanten miteinander durch eine solche Steck- und Rastverbindung zusammengefügt werden.

Jedes Plattenelement weist darüber hinaus aber auch Ausformungen 6 auf, die als Haken 10 ausgebildet sind. Die Haken wirken mit Ausnehmungen 7 zusammen, die korrespondierend dazu als Stege 11 realisiert sind. Die Haken 10 können somit in die Stege 11 eingehakt werden und bilden somit eine zweite Verbindungsmöglichkeit zwischen den Plattenelementen aus. Die so verbundenen Plattenelemente sind zueinander schwenkbar. Wie aus dem Vergleich der Figuren 2 und 3 mit der Darstellung aus Fig. 1 hervorgeht, wird zum einen über die Verrastung über die Nasen 8 und die Nuten 9 sowie über die Haken 10 und Stege 11 die gesamte Einfassung zusammengefügt, wobei sich hierdurch beliebig viele Plattenelemente ohne zusätzliche Verbindungsmittel miteinander verbinden lassen. Es können für die Einfassung praktisch beliebig große Seitenflächen zusammengebaut werden.

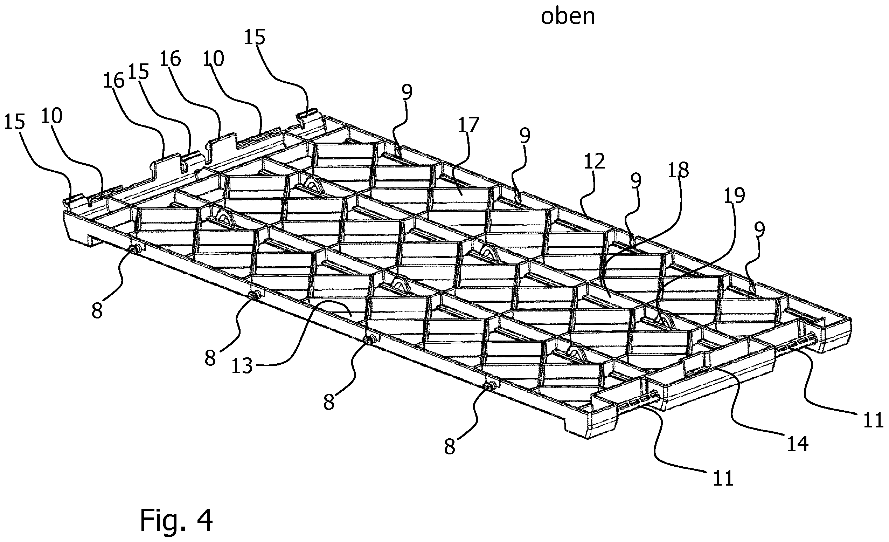

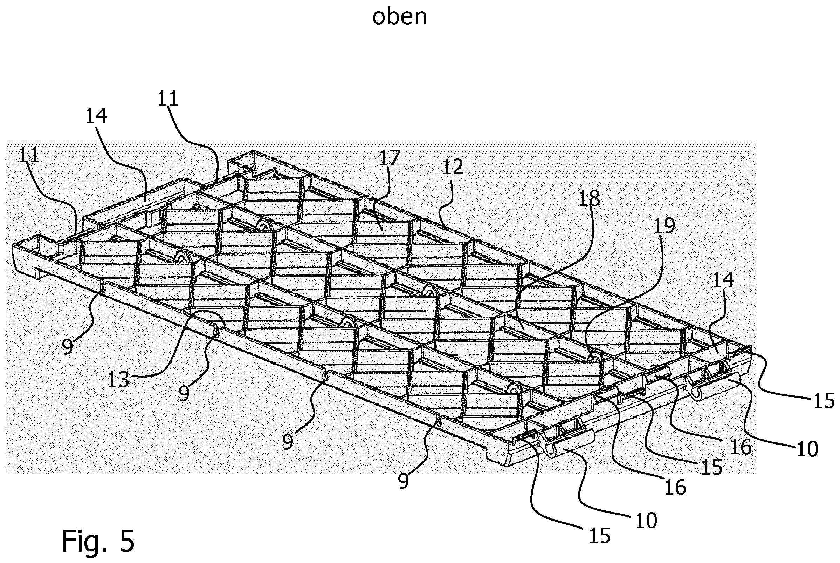

Fig. 4 zeigt eine Darstellung der Innenseite des Plattenelementes 3 in einer ersten Ansicht, Fig. 5 eine Darstellung der Innenseite des Plattenelementes 3 in einer zweiten Ansicht. Das Plattenelement 3 weist ein dessen Rand umgebendes Seitenrandprofil 12 auf, das senkrecht zur Seitenfläche 13 des Plattenelementes orientiert ist. Das Seitenrandprofil 12 enthält sowohl die Nasen 8 als auch die Nuten 9. Im Bereich der Haken 10 und der Stege 11 ein kastenartiges Hohlprofil 14 vorgesehen, das dort die Haken und Stege zusätzlich besonders stabilisiert.

Im Bereich der Haken 10 sind Anschlagmittel vorgesehen. Es handelt sich dabei um eine Anschlagkralle 15 und eine Anschlagflanke 16. Der Zweck der Anschlagkralle 15 und der Anschlagflanke 16 ist das Sichern und Arretieren einer definierten Winkelendstellung der über die Haken und Stege gelenkig miteinander verbundenen Plattenelemente und im Zusammenhang damit eine zusätzlich stabilisierende Verspannung der zusammengefügten Plattenelemente. Auf die Wirkungsweise der Anschlagkralle und der Anschlagflanke im Zusammenwirken mit der Gelenkverbindung zwischen Haken und Stegen wird weiter unten näher eingegangen.

Das Plattenelement weist eine Reihe von Versteifungsstegen 17 auf, die jeweils senkrecht zur Seitenwand 13 orientiert sind und sich als ein netz- oder wabenartiges Gitter über zumindest einen Teil der Seitenwand erstrecken. Zusammen mit dem Seitenrand und dem Hohlprofil 14, die den Randbereich des Plattenelementes verstärken, versteifen die Versteifungsstege 17 die Seitenwand 13 und verhindern deren Verformung unter der durch die Befüllung der Einfassung entstehenden Druckkraft.

Ein Teil der Versteifungsstege 17 sind als Längsstege 18 ausgebildet, die über die Seitenwand 13 parallel zu den Seitenrändern verlaufen. Die Längsstege 18 weisen eine Reihe von Spannöffnungen 19 auf, durch die zusätzliche Spannmittel, insbesondere Spanndrähte oder Spannseile, hindurchgezogen werden können. Die Nasen 8 weisen ebenfalls Öffnungen auf, sodass die Spannmittel ebenfalls durch die Nasen 8 hindurchgeführt werden können und somit die über die Nasen und Nuten mehrerer miteinander verrasteten Plattenelemente zusätzlich miteinander verspannen und somit die Anordnung stabilisieren.

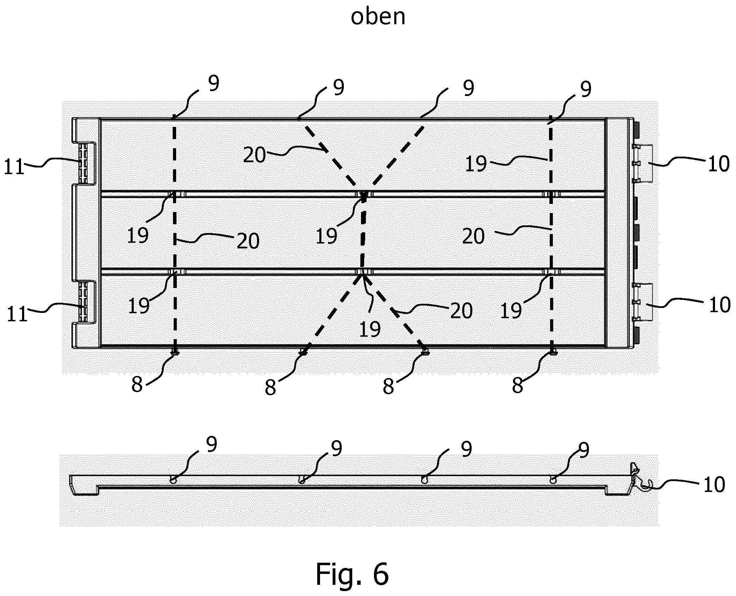

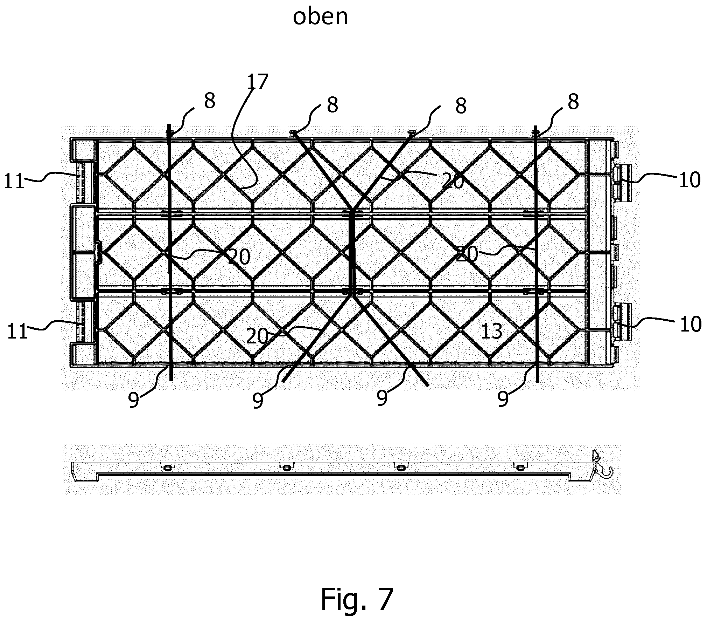

Die Figuren 6 und 7 zeigen beispielhafte Möglichkeiten zum Hindurchführen der Spannmittel. Bei dem hier gezeigten Beispiel sind Spanndrähte 20 vorgesehen, die sich im mittleren Bereich der Seitenfläche 13 infolge der Positionen der der gelegenen Öffnungen 19 überkreuzen und zumindest abschnittsweise diagonal über die Seitenfläche 13 verlaufen.

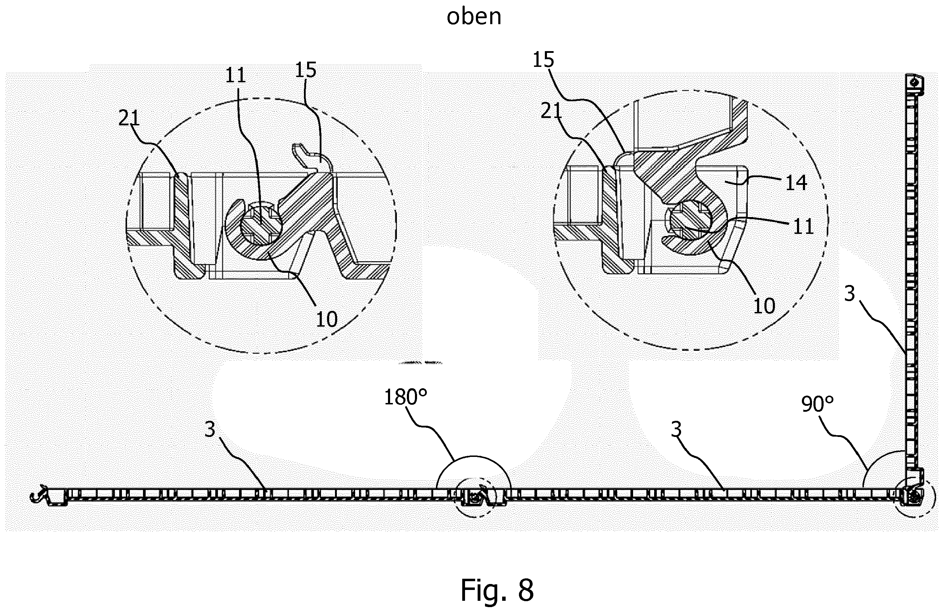

Fig. 8 zeigt die Wirkungsweise der zuvor genannten Anschlagmittel im Zusammenhang mit der Verbindung der Plattenelemente über die Haken 10 und Stege 11. Die Haken 10 werden mit den Stegen 11 wie in der Figur dargestellt eingehakt. Sie bilden dabei eine Gelenkverbindung aus. Zwei so verbundene Plattenelemente können dabei um diese Gelenkverbindung gegeneinander verschwenkt werden. Diese Verschwenkung kann bis zu einem bestimmten Grenzwinkel vorgenommen werden. In Fig. 8 sind zur Darstellung des Schwenkwinkels zwei Plattenelemente 3 in einem Winkel von 180° angeordnet, während ein drittes Plattenelement zu seinem benachbarten Plattenelement einen Winkel von 90° einnimmt. Dieser Winkel von 90° stellt den Grenzwinkel der Verbindung aus Haken und Steg dar. Er wird durch die Anschlagkralle 15 und die Anschlagflanke 16 stabilisiert und arretiert.

Die Arretierung bei dem Grenzwinkel von 90° erfolgt auf folgende Weise. Beim Einschwenken zweier benachbarter Plattenelemente um die Verbindung aus Haken 10 und Steg 11 greifen die im Bereich der Haken angeordneten Anschlagkrallen 15 über eine im Bereich der Stege des benachbarten Plattenelementes angeordnete Seitenwand 21 über und bilden dabei eine Klemmverbindung aus. Zugleich werden die im Bereich der Haken 10 ebenfalls bestehenden Anschlagflanken 16 in das benachbarte Plattenelement ebenfalls hinein eingeschwenkt und kommen dabei beim Erreichen des Grenzwinkels von 90° auf der Seitenfläche des betreffenden Plattenelementes zum Aufliegen. Das Plattenelement kann hierdurch nicht weiter eingeschwenkt werden, während andererseits über die Anschlagkrallen eine Rast- und Klemmverbindung zwischen den Plattenelementen realisiert ist.

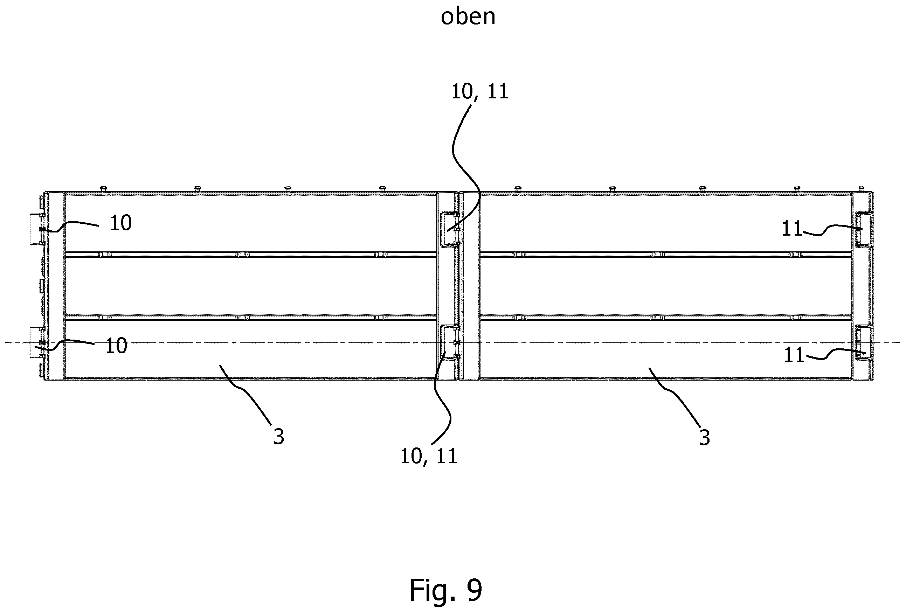

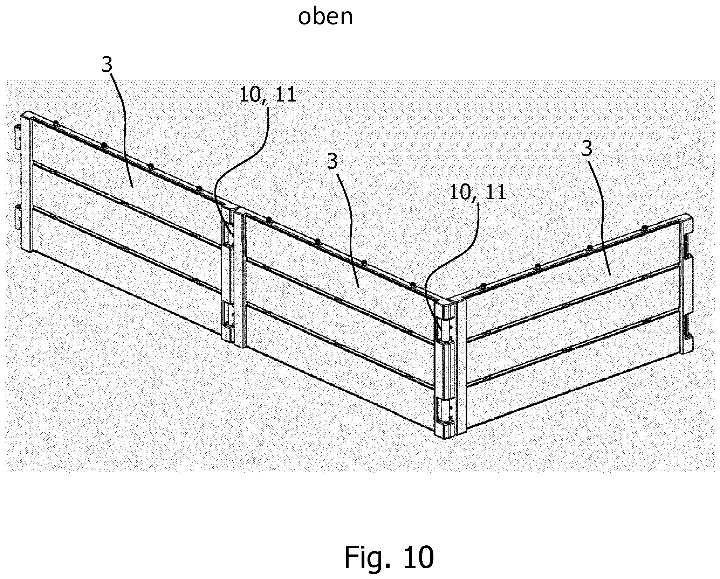

Die Figuren 9 und 10 zeigen die verschiedenen Verbindungen zwischen den Plattenelementen 3. In Fig. 9 bilden die über die Haken und Stege 10, 11 verbundenen Plattenelemente eine gerade Seitenwand der Einfassung, in Fig. 10 ist ein drittes Plattenelement angefügt, das in der beschriebenen Weise über die Haken und Stege 10, 11 rechtwinklig zum benachbarten Plattenelement orientiert ist.

Die Plattenelemente sind bei einer Ausführungsform einteilig und aus einem Kunststoff gefertigt. Die Plattenelemente können als einteilige Spritzgussteile ausgeführt sein.

Weitere Ausführungsformen ergeben sich aus den Unteransprüchen und im Rahmen fachmännischen Handelns.

### Bezugszeichenliste

- 1: Einfassung
- 2: Hohlraum
- 3: Plattenelement
- 4: Außenseite
- 5: Profillinie
- 6: Ausformung
- 7: Ausnehmung
- 8: Nase
- 9: Nut
- 10: Haken
- 11: Steg
- 12: Seitenrandprofil
- 13: Seitenfläche
- 14: Hohlprofil
- 15: Anschlagkralle
- 16: Anschlagflanke
- 17: Versteifungssteg
- 18: Längssteg
- 19: Spannöffnung
- 20: Spanndraht

## Patentansprüche

1. Einfassung (1) zum Aufnehmen von Erd- und/oder Kompostmaterial, bestehend aus
einer beliebigen Anzahl von einteiligen und miteinander zusammenfügbaren Plattenelementen (3), wobei jedes Plattenelement an paarweise einander gegenüberliegenden Seiten eine Reihe von Ausformungen (6) und dazu entsprechende Ausnehmungen (7) aufweist, wobei die Ausformungen eines ersten Plattenelementes mit den Ausnehmungen eines zweiten Plattenelementes ohne ein zusätzliches Verbindungselement verbindbar sind, wobei die Ausformungen (6) eine Reihe von Haken (10) und die Ausnehmungen (7) eine Reihe von Stegen (11) zum Einhaken der Haken sind,
**dadurch gekennzeichnet, dass**
ein im Bereich der Haken (10) mindestens in ein Hohlprofil (14) eines über die Stege (11) eingehakten weiteren Plattenelementes (3) übergreifendes und die verbundenen Plattenelemente in einer festen Winkelstellung fixierendes Anschlagmittel vorgesehen ist,
wobei das Anschlagmittel aus einer eine Flanke des Hohlprofils (14) übergreifenden Anschlagkralle (15) und einer in einer Endstellung an einer Flanke des Hohlprofils anliegenden Anschlagflanke (16) besteht.

2. Einfassung nach Anspruch 1,
**dadurch gekennzeichnet, dass**
die Ausformungen (6) in einer ersten Art eine Reihe von Nasen (8) und die Ausnehmungen (7) eine Reihe von Nuten (9) zum Einrasten der Nasen sind.

3. Einfassung nach einem der vorhergehenden Ansprüche,
**dadurch gekennzeichnet, dass**
das Plattenelement (3) eine die Seitenfläche (13) des Plattenelementes rückseitig gitterförmig bedeckende Anordnung aus Versteifungsstegen (17) aufweist.

4. Einfassung nach Anspruch 3,
**dadurch gekennzeichnet, dass**
ein das Plattenelement am Rand umgebendes Seitenrandprofil und/oder die Versteifungsstege Öffnungen (19) zum Hindurchführen mindestens eines Spannmittels, insbesondere eines Spannseiles (20), aufweisen.

## Claims

1. An enclosure (1) for receiving soil and/or compost material, being composed of an arbitrary number of one-piece and mutually joinable plate elements (3), wherein each plate element, on sides pairwise facing each other, has a series of formations (6) and recesses (7) corresponding thereto, wherein the formations of a first plate element are connectable to the recesses of a second plate element without any additional connecting element, wherein the formations (6) are a series of hooks (10), and the recesses (7) are a series of webs (11) for hooking in the hooks,
**characterized in that**
in the area of the hooks (10), a stopping means is provided overlapping a further plate element (3) hooked into at least one hollow profile (14) via the webs (11) and fixing the connected plate elements in a fixed angular position, wherein the stopping means is composed of a stopping claw (15) overlapping a flank of the hollow profile (14) and a stopping claw (16) resting against a flank of the hollow profile in an end position.

2. The enclosure according to claim 1,
**characterized in that**
in a first type, the formations (6) are a series of lugs (8), and the recesses (7) a series of grooves (9) for locking the lugs.

3. The enclosure according to any one of the preceding claims,
**characterized in that**
the plate element (3) has an arrangement of stiffening webs (17) which cover the lateral surface of the plate element on the rear side in a grid-shaped manner.

4. The enclosure according to claim 3,
**characterized in that**
a side edge profile surrounding the plate element at the edge and/or the stiffening webs have openings (19) for passing through at least one tensioning means, in particular a tensioning rope (20).

## Revendications

1. Encadrement (1) pour recevoir de la terre et/ou du compost, constitué par
un nombre quelconque d'éléments de plaque monoblocs et assemblables uns aux autres (3), chaque élément de plaque ayant une série de conformations (6) et d'évidements correspondants (7) sur des côtés mutuellement opposés par paire, les conformations d'un premier élément de plaque pouvant être reliées aux évidements d'un second élément de plaque sans élément de liaison supplémentaire, les conformations (6) étant une série de crochets (10) et les évidements (7) étant une série de barrettes (11) pour accrocher les crochets,
**caractérisé en ce que**
il est prévu un moyen de butée qui, dans la zone des crochets (10), coiffe au moins un profilé creux (14) d'un autre élément de plaque (3) accroché par l'intermédiaire des barrettes (11) et fixe les éléments de plaque reliés dans une position angulaire fixe,
le moyen de butée étant constitué par une griffe de butée (15) coiffant un flanc du profilé creux (14) et par un flanc de butée (16) en appui contre un flanc du profilé creux, dans une position finale.

2. Encadrement selon la revendication 1,
**caractérisé en ce que**
dans un premier type, les conformations (6) sont une rangée d'ergots (8) et les évidements (7) sont une rangée de rainures (9) pour enclencher les ergots.

3. Encadrement selon l'une des revendications précédentes,
**caractérisé en ce que**
l'élément de plaque (3) comporte un agencement de barrettes de raidissement (17) recouvrant la surface latérale (13) de l'élément de plaque sur la face arrière selon un motif en grille.

4. Encadrement selon la revendication 3,
**caractérisé en ce que**
un profilé de bord latéral entourant le bord de l'élément de plaque et/ou les barrettes de raidissement présente(nt) des ouvertures (19) pour le passage d'au moins un moyen de serrage, en particulier d'un câble tendeur (20).
